# EUROPEAN PATENT APPLICATION

(11) **EP 4 068 584 A2**
(43) Date of publication of application: **05.10.2022**
(21) Application number: 22163399.3
(22) Date of filing: 22.03.2022
(51) Int. Cl.: H02K 5/22, H02K 17/16

(54) **INDUCTION MOTOR FOR LEAKAGE PROTECTION**

(30) Priority: 30.03.2021 CN 202110337952
(71) Applicant: Wang, Zhongyi, Yongkang Zhejiang (CN)
(72) Inventor: Wang, Zhongyi, Yongkang Zhejiang (CN)
(74) Representative: Cleanthous, Marinos

(57) **Abstract**

The present invention provides an induction motor for leakage protection, and relates to the technical field of induction motors. The induction motor is composed of a tail shell, a cooling fan, a plastic shell, a stator, an end cover and a rotating shaft. The open end of the tail shell and the plastic shell are fixedly installed; the cooling fan is installed inside the plastic shell; the stator is fixedly installed inside the plastic shell; the rotating shaft is movably connected in the stator; one end of the plastic shell away from the tail shell is fixedly provided with the end cover; the surface of the rotating shaft is coated with an insulating layer to increase insulation property. The present invention solves the problem that the time of a user is greatly wasted.

## Description

### TECHNICAL FIELD

The present invention relates to the technical field of induction motors, and particularly to an induction motor for leakage protection.

### BACKGROUND

An induction motor refers to a motor which induces current in a rotor to achieve electromechanical energy conversion under the action of electromagnetic induction between a stator and the rotor. The stator of the induction motor is composed of a stator core, a stator winding and a base. The rotor is composed of a rotor core, a rotor winding and a rotating shaft. The rotor core is also a part of a main magnetic circuit, generally formed by stacking silicon steel sheets with thickness of 0.5 mm. The core is fixed on the rotating shaft or a rotor bracket. The appearance of the whole rotor is cylindrical. The rotor windings are classified into two categories: cage type and wound type.

After the motor is assembled, a power supply is often required to be communicated for use. At this time, a junction box is often installed on a shell of the motor, to facilitate the installation and use of a wire. The time of the user is greatly wasted because a sealing plate is often installed by bolts after the wire is installed in the existing junction box and a sealing cover is often repeatedly installed and disassembled when the motor is just produced for debugging.

### SUMMARY

The purpose of the present invention is to propose an induction motor for leakage protection in order to solve the problem that the time of a user is greatly wasted because the sealing plate is often installed by bolts after a wire is installed in the existing junction box and a sealing cover is often repeatedly installed and disassembled when a motor is just produced for debugging.

To achieve the above purpose, the present invention adopts the following technical solution: an induction motor for leakage protection is composed of a tail shell, a cooling fan, a plastic shell, a stator, an end cover and a rotating shaft. The open end of the tail shell and the plastic shell are fixedly installed; the plastic shell replaces a metal shell of the traditional motor to prevent leakage; the cooling fan is installed inside the plastic shell; the stator is fixedly installed inside the plastic shell; the rotating shaft is movably connected in the stator; one end of the plastic shell away from the tail shell is fixedly provided with the end cover; the surface of the rotating shaft is coated with an insulating layer to increase insulation property; a junction box is fixedly installed on the surface of the plastic shell; the inner wall of the junction box is movably connected with a sealing plate; the inner wall of the junction box is fixedly connected with a connecting column; the sealing plate slides through the connecting column and the junction box; the bottom end of the sealing plate is fixedly connected with a connecting frame; and an inserting block is slidably inserted into the connecting column.

Preferably, the inserting block has a shape of a letter "L"; a short arm end of the "L"-shaped inserting block is fixedly connected with a spring; the inner wall of the connecting column is rotatably connected with a rotating block; and one end of the spring away from the rotating block is fixedly connected with the inner wall of the connecting column.

Preferably, a cylinder is movably inserted into the rotating block; a circular arc surface of the cylinder is fixedly connected with a rectangular block; the surface of the rotating block is provided with a rectangular groove; the size of the rectangular groove is consistent with the size of the rectangular block; and the rectangular groove is used for inserting the rectangular block.

Preferably, the circular arc surface of the cylinder is fixedly connected with a long plate; an inserting strip is fixedly installed in the long plate; the inner wall of the connecting column is provided with a slot; the slot is used for inserting the inserting strip; and the slot is distributed around the rotating block by taking the cylinder as a central axis.

Preferably, the bottom end of the sealing plate is fixedly connected with a long column; a disc is slidably sleeved on the surface of the long column; the bottom end of the long column is fixedly connected with a chassis; the surface of the chassis is fixedly connected with a spring; one end of the spring away from the chassis is fixedly connected with the disc; the spring is sleeved on the surface of the long column; a long rod is slidably connected in the disc; a sliding rod is slidably sleeved on the surface of the long rod; the inner wall of the sliding rod is fixedly connected with a spring; and one end of the spring away from the sliding rod is fixedly connected with the long rod.

Preferably, a circular bar is movably inserted into the long rod; the surface of the circular bar and the disc are rotatably connected; the circular arc surface of the circular bar is fixedly connected with a limiting block; a connecting groove is formed at the position of the long rod relative to the circular bar; and the connecting groove is used for the limiting block to penetrate through.

Preferably, the surface of the long rod is fixedly connected with a spring; one end of the spring away from the long rod is fixedly connected with the disc; the spring is sleeved on the surface of the circular bar; and the inner diameter size of the spring is greater than the size of the limiting block.

Preferably, the surface of the plastic shell is fixedly connected with a base; the surface of the base is provided with a groove; the inner wall of the groove is rotatably connected with square blocks; connecting blocks are movably inserted into the square blocks; the surfaces of the connecting blocks are rotatably connected with handles; the number of the handles is two, and the two handles are located on both sides of the plastic shell; and an inserting rod is inserted into the square blocks by threads.

Compared with the prior art, the present invention has the following advantages and positive effects:
1. In the present invention, to install the sealing plate, the sealing plate is placed in the junction box at first. After the top end of the sealing plate is flush with the top end of the connecting column, the connecting frame at the bottom end of the sealing plate is flush with the inserting block. At this time, the cylinder is firstly pulled up, and the cylinder will drive the rectangular block on the surface to rise. At the same time, the cylinder will pull the inserting strip out of the slot through the long plate. At this time, the inserting strip will not limit the rotation of the cylinder through the slot. Then, the cylinder is rotated; the cylinder will drive the rotating block to rotate through the rectangular block; and then the rotating block will rotate in the connecting column. Because one end of the rotating block near the inserting block protrudes partially, the rotating block will squeeze the inserting block, so that the inserting block will be extruded from the connecting column and inserted into the connecting frame. At this time, the sealing plate will be restricted to move up and down through the connecting frame. At this time, when the cylinder is pressed in the direction of the rotating block, the cylinder will drive the long plate on the surface to move. At this time, the long plate will drive the inserting strip to be inserted into the slot at the inner wall of the connecting column. Then, the inserting strip is clamped in the slot. At the same time, the slot will limit the rotation of the cylinder through the inserting strip. The rectangular groove on the surface of the rotating block is used to insert the rectangular block, so that the rotating block can be driven to rotate when the cylinder rotates. To remove the sealing plate, the cylinder is moved at first and the inserting strip is pulled out from the slot. Then, the rotating block is driven to rotate through the rectangular block, and the protruding end of the rotating block will rotate in the direction away from the inserting block. At this time, the inserting block will not be blocked by the rotating block; the spring on the surface of the inserting block will restore the elasticity to push the inserting block away from the closed direction; and at this time, the inserting block moves out from the inside of the connecting frame, so as not to limit the movement of the connecting frame. The sealing plate can then be opened, and the whole structure solves the problem that the time of the user is greatly wasted because the sealing plate is often installed by bolts after a wire is installed in the existing junction box and a sealing cover is often repeatedly installed and disassembled when a motor is just produced for debugging.
2. In the present invention, the disc and the sliding rod are pressed towards the chassis at first, and then part of the top end of the long column will be exposed. At this time, the wire is wound around the surface of the long column. After the wire is wound, the disc and the sliding rod are released. At this time, the disc will be pushed by the spring on the surface of the chassis, so as to become close to the sealing plate. The sliding rod will also be pushed by the spring at the top end of the long rod to approach the sealing plate. At the same time, the long rod is slided so that the long rod slides in the direction of the long column. Then, the long rod and the sliding rod squeeze the wire, thereby preventing the wire from unraveling. When the long rod and the sliding rod squeeze the wire, the long rod will also squeeze the spring on the surface, and then the circular bar is rotated. The circular bar will drive the limiting block on the surface to rotate. At this time, the limiting block and the connecting groove are dislocated, and then the limiting block will be abutted against the long rod. At the same time, because the long rod is pushed by wires and the spring, a transverse thrust is provided for the limiting block, thereby increasing the friction between the long rod and the limiting block and avoiding the problem of easy slide in the limiting block. The whole structure solves the problem that when the wire is too long, if there is no tool in hand, it will be messy after the wire is placed directly in the junction box.
3. In the present invention, when the motor needs to be moved, firstly the square blocks are rotated out from the groove. At this time, two connecting blocks are respectively inserted into two square blocks. At the same time, the inserting rod is tightened. The inserting rod penetrates through the square blocks and is inserted into the connecting blocks. At this time, the inserting rod will limit the motion of the connecting blocks. Then, both ends of the base are provided with handles. The personnel will transport the motor more conveniently through the handles, thereby avoiding the problem that the transportation places on the motor have edges and corners and hands of workers are easy to be touched with the edges and corners with pain in long-time transportation.

### DESCRIPTION OF DRAWINGS

Fig. 1 is a three-dimensional structural schematic diagram of an induction motor for leakage protection proposed by the present invention;
Fig. 2 is a disassembly schematic diagram of Fig. 1 in an induction motor for leakage protection proposed by the present invention;
Fig. 3 is a partial structural schematic diagram of a sealing plate in an induction motor for leakage protection proposed by the present invention;
Fig. 4 is a structural schematic diagram of a bottom side of Fig. 3 in an induction motor for leakage protection proposed by the present invention;
Fig. 5 is a partial structural schematic diagram of a connecting column in an induction motor for leakage protection proposed by the present invention;
Fig. 6 is a partial structural schematic diagram of a cylinder in an induction motor for leakage protection proposed by the present invention;
Fig. 7 is a partial structural schematic diagram of a long column in an induction motor for leakage protection proposed by the present invention; and
Fig. 8 is a partial structural schematic diagram of a long rod in an induction motor for leakage protection proposed by the present invention.

Legends: 1 tail shell; 2 cooling fan; 3 plastic shell; 4 stator; 5 end cover; 6 rotating shaft; 7 junction box; 8 sealing plate; 9 connecting column; 10 inserting block; 11 rotating block; 12 cylinder; 13 connecting frame; 14 rectangular block; 15 long plate; 16 inserting strip; 17 long column; 18 disc; 19 chassis; 20 long rod; 21 sliding rod; 22 circular bar; 23 limiting block; 24 base; 25 square block; 26 inserting rod; 27 connecting block; 28 handle; 29 groove.

### DETAILED DESCRIPTION

To understand above purposes, features and advantages of the present invention more clearly, the present invention is further described below in combination with drawings and embodiments. It should be explained that if there is no conflict, embodiments in the present application and the features in the embodiments can be mutually combined.

Many specific details are elaborated in the following description to thoroughly understand the present invention. However, the present invention can also be implemented in other modes different from those described herein. Therefore, the present invention is not limited to specific embodiments of the description disclosed below.

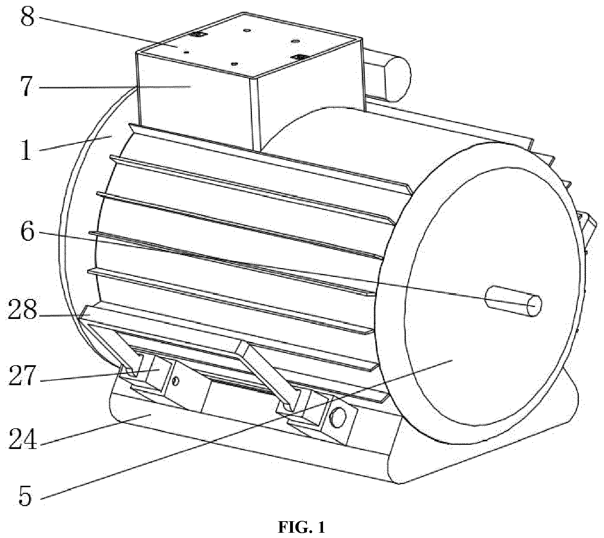

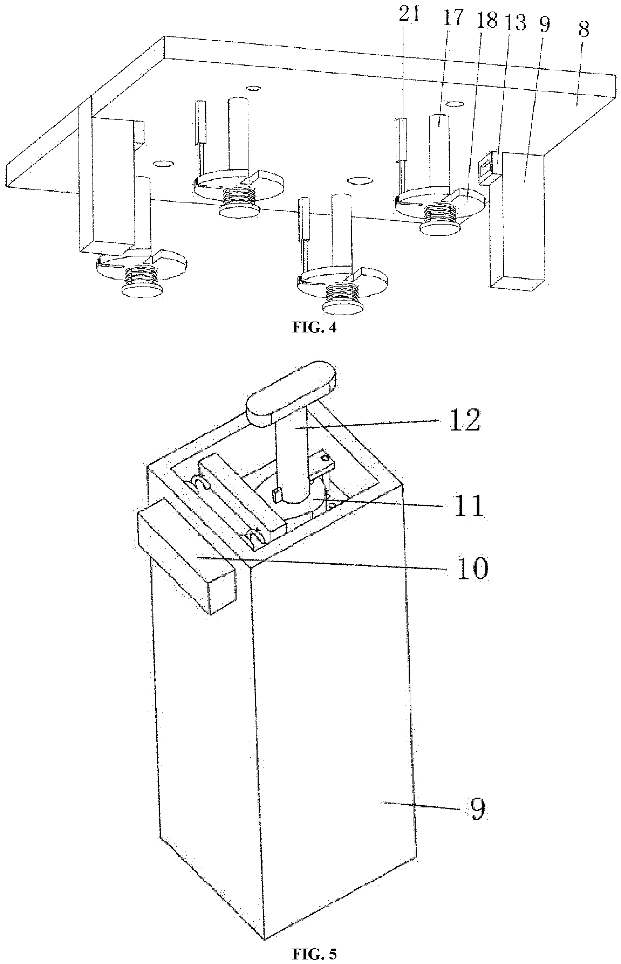

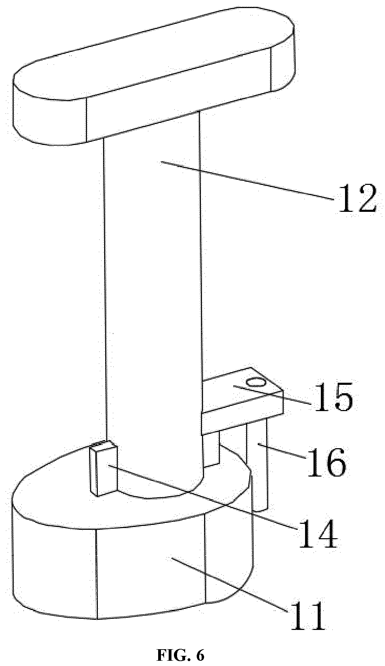

Embodiment 1 is shown in Figs. 1-8. The present invention provides an induction motor for leakage protection, comprising a tail shell 1, a cooling fan 2, a plastic shell 3, a stator 4, an end cover 5 and a rotating shaft 6.

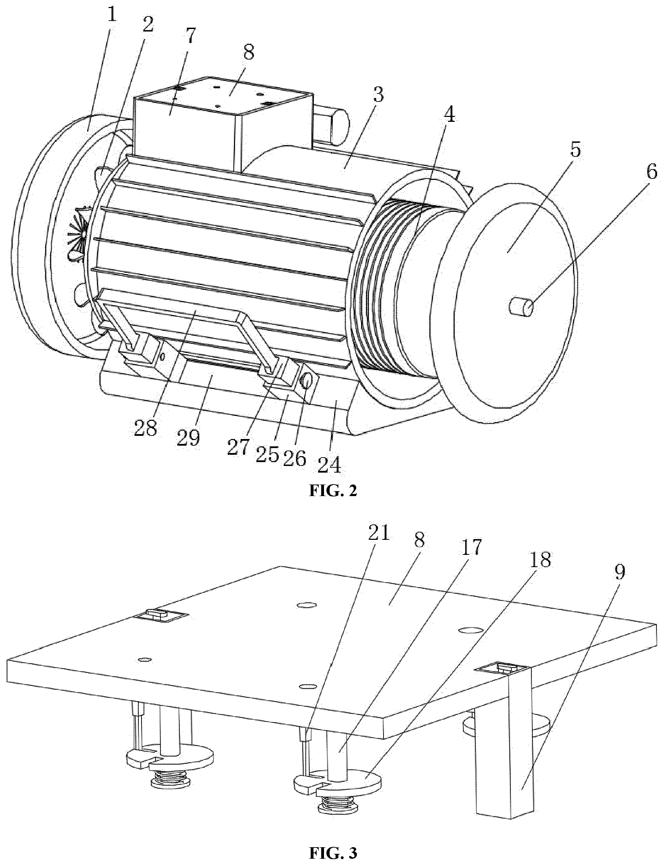

As shown in Fig. 1 and Fig. 3, the open end of the tail shell 1 and the plastic shell 3 are fixedly installed; the cooling fan 2 is installed inside the plastic shell 3; the stator 4 is fixedly installed inside the plastic shell 3; the rotating shaft 6 is movably connected in the stator 4; one end of the plastic shell 3 away from the tail shell 1 is fixedly provided with the end cover 5; the surface of the rotating shaft 6 is coated with an insulating layer to increase insulation property; a junction box 7 is fixedly installed on the surface of the plastic shell 3; the inner wall of the junction box 7 is movably connected with a sealing plate 8; the inner wall of the junction box 7 is fixedly connected with a connecting column 9; and the sealing plate 8 slides through the connecting column 9 and the junction box 7. The bottom end of the sealing plate 8 is fixedly connected with a connecting frame 13. An inserting block 10 is slidably inserted in the connecting column 9; the inserting block 10 has a shape of a letter "L"; a short arm end of the "L"-shaped inserting block 10 is fixedly connected with a spring; the inner wall of the connecting column 9 is rotatably connected with a rotating block 11; and one end of the spring away from the rotating block 11 is fixedly connected with the inner wall of the connecting column 9. To install the sealing plate 8, the sealing plate 8 is placed in the junction box 7 at first. After the top end of the sealing plate 8 is flush with the top end of the connecting column 9, the connecting frame 13 at the bottom end of the sealing plate 8 is flush with the inserting block 10. At this time, the cylinder 12 is firstly pulled up, and the cylinder 12 will drive the rectangular block 14 on the surface to rise. At the same time, the cylinder 12 will pull the inserting strip 16 out of the slot through the long plate 15. At this time, the inserting strip 16 will not limit the rotation of the cylinder 12 through the slot. Then, the cylinder 12 is rotated; the cylinder 12 will drive the rotating block 11 to rotate through the rectangular block 14; and then the rotating block 11 will rotate in the connecting column 9. Because one end of the rotating block 11 near the inserting block 10 protrudes partially, the rotating block 11 will squeeze the inserting block 10, so that the inserting block 10 will be extruded from the connecting column 9 and inserted into the connecting frame 13. At this time, the sealing plate 8 will be restricted to move up and down through the connecting frame 13. At this time, when the cylinder 12 is pressed in the direction of the rotating block 11, the cylinder 12 will drive the long plate 15 on the surface to move. At this time, the long plate 15 will drive the inserting strip 16 to be inserted into the slot at the inner wall of the connecting column 9. Then, the inserting strip 16 is clamped in the slot. At the same time, the slot will limit the rotation of the cylinder 12 through the inserting strip 16. The rectangular groove on the surface of the rotating block 11 is used to insert the rectangular block 14, so that the rotating block 11 can be driven to rotate when the cylinder 12 rotates. The cylinder 12 is movably inserted into the rotating block 11; a circular arc surface of the cylinder 12 is fixedly connected with the rectangular block 14; the surface of the rotating block 11 is provided with the rectangular groove; the size of the rectangular groove is consistent with the size of the rectangular block 14; and the rectangular groove is used for inserting the rectangular block 14. The circular arc surface of the cylinder 12 is fixedly connected with a long plate 15; an inserting strip 16 is fixedly installed in the long plate 15; the inner wall of the connecting column 9 is provided with a slot; the slot is used for inserting the inserting strip 16; and the slot is distributed around the rotating block 11 by taking the cylinder 12 as a central axis. To remove the sealing plate 8, the cylinder 12 is moved at first and the inserting strip 16 is pulled out from the slot. Then, the rotating block 11 is driven to rotate through the rectangular block 14, and the protruding end of the rotating block 11 will rotate in the direction away from the inserting block 10. At this time, the inserting block 10 will not be blocked by the rotating block 11; the spring on the surface of the inserting block 10 will restore the elasticity to push the inserting block 10 away from the closed direction; and at this time, the inserting block 10 moves out from the inside of the connecting frame 13, so as not to limit the movement of the connecting frame 13. The sealing plate 8 can then be opened.

Effects are as follows: to install the sealing plate 8, the sealing plate 8 is placed in the junction box 7 at first. After the top end of the sealing plate 8 is flush with the top end of the connecting column 9, the connecting frame 13 at the bottom end of the sealing plate 8 is flush with the inserting block 10. At this time, the cylinder 12 is firstly pulled up, and the cylinder 12 will drive the rectangular block 14 on the surface to rise. At the same time, the cylinder 12 will pull the inserting strip 16 out of the slot through the long plate 15. At this time, the inserting strip 16 will not limit the rotation of the cylinder 12 through the slot. Then, the cylinder 12 is rotated; the cylinder 12 will drive the rotating block 11 to rotate through the rectangular block 14; and then the rotating block 11 will rotate in the connecting column 9. Because one end of the rotating block 11 near the inserting block 10 protrudes partially, the rotating block 11 will squeeze the inserting block 10, so that the inserting block 10 will be extruded from the connecting column 9 and inserted into the connecting frame 13. At this time, the sealing plate 8 will be restricted to move up and down through the connecting frame 13. At this time, when the cylinder 12 is pressed in the direction of the rotating block 11, the cylinder 12 will drive the long plate 15 on the surface to move. At this time, the long plate 15 will drive the inserting strip 16 to be inserted into the slot at the inner wall of the connecting column 9. Then, the inserting strip 16 is clamped in the slot. At the same time, the slot will limit the rotation of the cylinder 12 through the inserting strip 16. The rectangular groove on the surface of the rotating block 11 is used to insert the rectangular block 14, so that the rotating block 11 can be driven to rotate when the cylinder 12 rotates. To remove the sealing plate 8, the cylinder 12 is moved at first and the inserting strip 16 is pulled out from the slot. Then, the rotating block 11 is driven to rotate through the rectangular block 14, and the protruding end of the rotating block 11 will rotate in the direction away from the inserting block 10. At this time, the inserting block 10 will not be blocked by the rotating block 11; the spring on the surface of the inserting block 10 will restore the elasticity to push the inserting block 10 away from the closed direction; and at this time, the inserting block 10 moves out from the inside of the connecting frame 13, so as not to limit the movement of the connecting frame 13. The sealing plate 8 can then be opened. The whole structure solves the problem that the time of a user is greatly wasted because the sealing plate 8 is often installed by bolts after a wire is installed in the existing junction box 7 and a sealing cover is often repeatedly installed and disassembled when a motor is just produced for debugging.

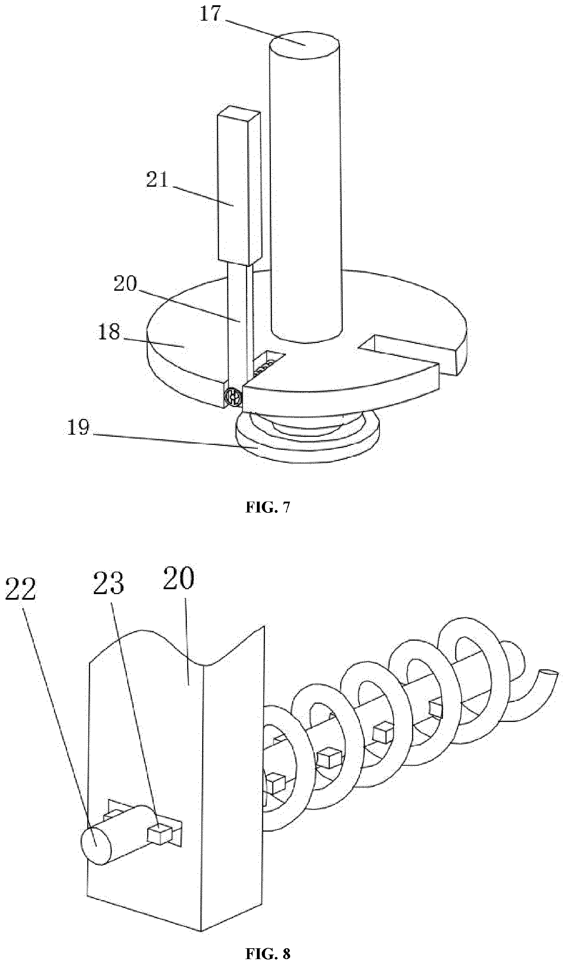

As shown in Fig. 1 and Fig. 7, the bottom end of the sealing plate 8 is fixedly connected with a long column 17; a disc 18 is slidably sleeved on the surface of the long column 1); the bottom end of the long column 17 is fixedly connected with a chassis 19; the surface of the chassis 19 is fixedly connected with a spring; one end of the spring away from the chassis 19 is fixedly connected with the disc 18; the spring is sleeved on the surface of the long column 17; a long rod 20 is slidably connected in the disc 18; and a sliding rod 21 is slidably sleeved on the surface of the long rod 20. The inner wall of the sliding rod 21 is fixedly connected with a spring, and one end of the spring away from the sliding rod 21 is fixedly connected with the long rod 20. The disc 18 and the sliding rod 21 are pressed towards the chassis 19 at first, and then part of the top end of the long column 17 will be exposed. At this time, the wire is wound around the surface of the long column 17. After the wire is wound, the disc 18 and the sliding rod 21 are released. At this time, the disc 18 will be pushed by the spring on the surface of the chassis 19, so as to become close to the sealing plate 8. The sliding rod 21 will also be pushed by the spring at the top end of the long rod 20 to approach the sealing plate 8. At the same time, the long rod 20 is slided so that the long rod 20 slides in the direction of the long column 17. Then, the long rod 20 and the sliding rod 21 squeeze the wire, thereby preventing the wire from unraveling. A circular bar 22 is movably inserted into the long rod 20; the surface of the circular bar 22 and the disc 18 are rotatably connected; the circular arc surface of the circular bar 22 is fixedly connected with a limiting block 23; a connecting groove is formed at the position of the long rod 20 relative to the circular bar 22; and the connecting groove is used for the limiting block 23 to penetrate through. The surface of the long rod 20 is fixedly connected with a spring; one end of the spring away from the long rod 20 is fixedly connected with the disc 18; the spring is sleeved on the surface of the circular bar 22; and the inner diameter size of the spring is greater than the size of the limiting block 23. When the long rod 20 and the sliding rod 21 squeeze the wire, the long rod 20 will also squeeze the spring on the surface, and then the circular bar 22 is rotated. The circular bar 22 will drive the limiting block 23 on the surface to rotate. At this time, the limiting block 23 and the connecting groove are dislocated, and then the limiting block 23 will be abutted against the long rod 20. At the same time, because the long rod 20 is pushed by wires and the spring, a transverse thrust is provided for the limiting block 23, thereby increasing the friction between the long rod 20 and the limiting block 23 and avoiding the problem of easy slide in the limiting block 23.

Effects are as follows: the disc 18 and the sliding rod 21 are pressed towards the chassis 19 at first, and then part of the top end of the long column 17 will be exposed. At this time, the wire is wound around the surface of the long column 17. After the wire is wound, the disc 18 and the sliding rod 21 are released. At this time, the disc 18 will be pushed by the spring on the surface of the chassis 19, so as to become close to the sealing plate 8. The sliding rod 21 will also be pushed by the spring at the top end of the long rod 20 to approach the sealing plate 8. At the same time, the long rod 20 is slided so that the long rod 20 slides in the direction of the long column 17. Then, the long rod 20 and the sliding rod 21 squeeze the wire, thereby preventing the wire from unraveling. When the long rod 20 and the sliding rod 21 squeeze the wire, the long rod 20 will also squeeze the spring on the surface, and then the circular bar 22 is rotated. The circular bar 22 will drive the limiting block 23 on the surface to rotate. At this time, the limiting block 23 and the connecting groove are dislocated, and then the limiting block 23 will be abutted against the long rod 20. At the same time, because the long rod 20 is pushed by wires and the spring, a transverse thrust is provided for the limiting block 23, thereby increasing the friction between the long rod 20 and the limiting block 23 and avoiding the problem of easy slide in the limiting block 23. The whole structure solves the problem that when the wire is too long, if there is no tool in hand, it will be messy after the wire is placed directly in the junction box 7.

Embodiment 2 is based on embodiment 1. As shown in Fig. 1 and Fig. 2, the surface of the plastic shell 3 is fixedly connected with a base 24; the surface of the base 24 is provided with a groove 29; the inner wall of the groove 29 is rotatably connected with square blocks 25; connecting blocks 27 are movably inserted into the square blocks 25; the surfaces of the connecting blocks 27 are rotatably connected with handles 28; and an inserting rod 26 is inserted into the square blocks 25 by threads. When the motor needs to be moved, firstly the square blocks 25 are rotated out from the groove 29. At this time, two connecting blocks 27 are respectively inserted into two square blocks 25. At the same time, the inserting rod 26 is tightened. The inserting rod 26 penetrates through the square blocks 25 and is inserted into the connecting blocks 27. At this time, the inserting rod 26 will limit the motion of the connecting blocks 27. Then, both ends of the base 24 are provided with handles 28. The personnel will transport the motor more conveniently through the handles 28. The quantity of the handles 28 is two. Two handles 28 are located at both sides of the plastic shell 3.

Effects are as follows: when the motor needs to be moved, firstly the square blocks 25 are rotated out from the groove 29. At this time, two connecting blocks 27 are respectively inserted into two square blocks 25. At the same time, the inserting rod 26 is tightened. The inserting rod 26 penetrates through the square blocks 25 and is inserted into the connecting blocks 27. At this time, the inserting rod 26 will limit the motion of the connecting blocks 27. Then, both ends of the base 24 are provided with handles 28. The personnel will transport the motor more conveniently through the handles 28, thereby avoiding the problem that the transportation places on the motor have edges and corners and hands of workers are easy to be touched with the edges and corners with pain in long-time transportation.

The above only describes preferred embodiments of the present invention, not intended to limit the present invention in any form. Any of those skilled in the art may make amendments or modifications to the above disclosed technical content into equivalent embodiments with equivalent changes to apply to other fields. However, any simple amendment, equivalent change and modification made to the above embodiments according to the technical essence of the present invention without departing from the content of the technical solutions of the present invention shall still belong to the protection scope of the technical solutions of the present invention.

## Claims

1. An induction motor for leakage protection, which is composed of a tail shell (1), a cooling fan (2), a plastic shell (3), a stator (4), an end cover (5)and a rotating shaft (6), wherein the open end of the tail shell (1) and the plastic shell (3) are fixedly installed; the cooling fan (2) is installed inside the plastic shell (3); the stator (4) is fixedly installed inside the plastic shell (3); the rotating shaft (6) is movably connected in the stator (4); one end of the plastic shell (3) away from the tail shell (1) is fixedly provided with the end cover (5); the surface of the rotating shaft (6) is coated with an insulating layer to increase insulation property; a junction box (7) is fixedly installed on the surface of the plastic shell (3); the inner wall of the junction box (7) is movably connected with a sealing plate (8); the inner wall of the junction box (7) is fixedly connected with a connecting column (9); the sealing plate (8) slides through the connecting column (9) and the junction box (7); the bottom end of the sealing plate (8) is fixedly connected with a connecting frame (13); and an inserting block (10) is slidably inserted into the connecting column (9).

2. The induction motor for leakage protection according to claim 1, wherein the inserting block (10) has a shape of a letter "L"; a short arm end of the "L"-shaped inserting block (10) is fixedly connected with a spring; the inner wall of the connecting column (9) is rotatably connected with a rotating block (11); and one end of the spring away from the rotating block (11) is fixedly connected with the inner wall of the connecting column (9).

3. The induction motor for leakage protection according to claim 2, wherein a cylinder (12) is movably inserted into the rotating block (11); a circular arc surface of the cylinder (12) is fixedly connected with a rectangular block (14); the surface of the rotating block (11) is provided with a rectangular groove; the size of the rectangular groove is consistent with the size of the rectangular block (14); and the rectangular groove is used for inserting the rectangular block (14).

4. The induction motor for leakage protection according to claim 3, wherein the circular arc surface of the cylinder (12) is fixedly connected with a long plate (15); an inserting strip (16) is fixedly installed in the long plate (15); the inner wall of the connecting column (9) is provided with a slot; the slot is used for inserting the inserting strip (16); and the slot is distributed around the rotating block (11) by taking the cylinder (12) as a central axis.

5. The induction motor for leakage protection according to claim 1, wherein the bottom end of the sealing plate (8) is fixedly connected with a long column (17); a disc (18) is slidably sleeved on the surface of the long column (17); the bottom end of the long column (17) is fixedly connected with a chassis (19); the surface of the chassis (19) is fixedly connected with a spring; one end of the spring away from the chassis (19) is fixedly connected with the disc (18); the spring is sleeved on the surface of the long column (17); a long rod (20) is slidably connected in the disc (18); and a sliding rod (21) is slidably sleeved on the surface of the long rod (20).

6. The induction motor for leakage protection according to claim 5, wherein a circular bar (22) is movably inserted into the long rod (20); the surface of the circular bar (22) and the disc (18) are rotatably connected; the circular arc surface of the circular bar (22) is fixedly connected with a limiting block (23); a connecting groove is formed at the position of the long rod (20) relative to the circular bar (22); and the connecting groove is used for the limiting block (23) to penetrate through.

7. The induction motor for leakage protection according to claim 5, wherein the surface of the long rod (20) is fixedly connected with a spring; one end of the spring away from the long rod (20) is fixedly connected with the disc (18); the spring is sleeved on the surface of the circular bar (22); and the inner diameter size of the spring is greater than the size of the limiting block (23).

8. The induction motor for leakage protection according to claim 1, wherein the surface of the plastic shell (3) is fixedly connected with a base (24); the surface of the base (24) is provided with a groove (29); the inner wall of the groove (29) is rotatably connected with square blocks (25); connecting blocks (27) are movably inserted into the square blocks (25); the surfaces of the connecting blocks (27) are rotatably connected with handles (28); and an inserting rod (26) is inserted into the square blocks (25) by threads.

9. The induction motor for leakage protection according to claim 8, wherein the number of the handles (28) is 2 and the two handles (28) are located on both sides of the plastic shell (3).

10. The induction motor for leakage protection according to claim 5, wherein the inner wall of the sliding rod (21) is fixedly connected with a spring, and one end of the spring away from the sliding rod (21) is fixedly connected with the long rod (20).
